(19)

Europäisches
Patentamt
European
Patent Office
Office européen
des brevets

(11)     EP 2 227 651 B1

(12)         **EUROPEAN PATENT SPECIFICATION**

(45) Date of publication and mention
of the grant of the patent:
**06.06.2012  Bulletin 2012/23**

(51) Int Cl.:
*F17C 5/06* *(2006.01)*     *F17C 7/00* *(2006.01)*

(21) Application number: **08870979.5**

(22) Date of filing: **29.11.2008**

(86) International application number:
**PCT/IB2008/003928**

(87) International publication number:
**WO 2009/090491 (23.07.2009 Gazette 2009/30)**

(54) **WARMING SYSTEMS FOR HIGH PRESSURE GAS STORAGE DEVICES**

ERWÄRMUNGSSYSTEME FÜR HOCHDRUCK-GASSPEICHERVORRICHTUNGEN

SYSTÈMES DE RÉCHAUFFEMENT POUR DISPOSITIFS DE STOCKAGE DE GAZ À HAUTE
PRESSION

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **30.11.2007  US 947813
30.11.2007  US 947816
30.11.2007  US 947820**

(43) Date of publication of application:
**15.09.2010  Bulletin 2010/37**

(60) Divisional application:
**11001875.1 / 2 375 121
11001876.9 / 2 363 629**

(73) Proprietor: **Honda Motor Co., Ltd.
Minato-ku
Tokyo 107-8556 (JP)**

(72) Inventor: **HANDA, Kiyoshi
Raymond, OH 43067-9705 (US)**

(74) Representative: **Beresford, Keith Denis Lewis
Beresford & Co.
16 High Holborn
London
WC1V 6BX (GB)**

(56) References cited:
**EP-A2- 0 877 185     EP-A2- 0 893 293
EP-A2- 1 538 390     WO-A1-2007/072470
DE-A1- 3 530 806     FR-A- 1 379 049
FR-A- 1 454 441     US-A1- 2006 219 298
US-A1- 2007 246 122**

## Description

## FIELD OF THE INVENTION

The invention relates to a heating system for high pressure storage tanks for hydrogen, CNG and other industrial gases, by compensating for thermal and mechanical stresses caused by a low system temperatures resulting from gas decompression in a vehicle tank during driving as fuel gas is depleted from a storage tank and environmental exposure of storage tanks in low temperature climate conditions. Heating is accomplished by heating the tank system by passing an electrical current through a resistive structural material from which the tank is formed. Warning reduces the risk of a fuel gas leak in cold climate driving conditions, tank durability is increased the because the internal temperature differences between the stored gas and the tank are reduced, and temperature differences between seals and gas flow devices associated with the tank and gas flow controls, that otherwise would cause mechanical stresses, are minimized.

## BACKGROUND OF THE INVENTION

Vehicles powered by compressed natural gas (CNGV) and hydrogen gas (FCV) typically include on board high pressure gas fuel tanks that may include gas absorbing materials within the tank interior. During driving, the gas inside the tanks becomes cold, caused by the tank pressure decreasing when gas is consumed by the vehicle power plant resulting in decompression of the tank. Gas absorbing materials used in the tank interior will absorb the intrinsic heat in the gas during the gas discharge from the tank during vehicle operation. In cold climates, the internal gas temperature in the tank can drop to -60°C or below, a temperature that may be below the permissible operating temperature of 0-rings, or other rubber seals, or gas flow controls in the tank. An excessively low temperature in the tank may upset design tolerance limits for the seals and flow controls and cause the stored gas to leak as a result of temperature caused stresses in the tank system assembly. As an example, when the ambient temperature is -20°C, the reduction of internal tank temperature by an additional -40° C due to gas decompression effects will result in an internal temperature in the gas tank of -60°C. Expansion and contraction of the tank and the component parts of the gas flow system associated with the tank may produce adverse mechanical stress effects. In the specification, reference to high pressure gas powered vehicles includes the utilization of hydrogen gas to power fuel cells (FCV's) and internal combustion engines and the use of correlates with the use of the invention with compressed natural gas to power internal combustion engines (CNGV's). Although hydrogen is typically referred to in the specification and examples, the term "hydrogen" is, in most instances, intended to be interchangeable with CNG and other fuel gases. Fuel gases are referred to as a "gas" or "high pressure gas." United States published patent application no. US 200610219298 A1, which represents the closest prior art, discloses a compressed gas storage system including a gas tank for storing compressed gas, a gas discharge path provided in the gas tank, a solenoid valve disposed inside the tank and connected to the gas discharge path for controlling the flow of compressed gas from the tank, and a control unit to which the solenoid valve is connected. An outer circumferential surface of the solenoid valve is covered with a cover, so that a space defined between the cover and the outer circumferential surface communicates with the gas discharge path to thereby form a gas flow path. A heat transfer fin is formed on an inner circumferential surface of the cover and extends radially inwardly, so as to be brought into contact with the outer circumferential surface of the solenoid valve.

## OBJECTS OF THE INVENTION

It is an object of the present invention to provide warming systems for a high pressure tank utilizing the inherent electrically conductive characteristics of a carbon fiber tank and/or the tank liner to warm the tank and the gas therein such as by passing a current through the resistive material from which the tank is formed.

It is a further object to reduce the risk of a fuel gas leak in cold climate driving conditions caused by excessively low tank and / or gas temperatures. As a result, tank durability is increased, the internal temperature difference between the stored gas in the tank and the tank wall is reduced, and other components of the tank gas flow and control system are warmed. The lower extent of temperature fluctuations of a driving cycle in the tank is reduced.

The invention is described more fully in the following description of the preferred embodiment considered in view of the drawings in which:

## BRIEF DESCRIPTION OF THE SEVERAL VIEWS OF THE DRAWINGS

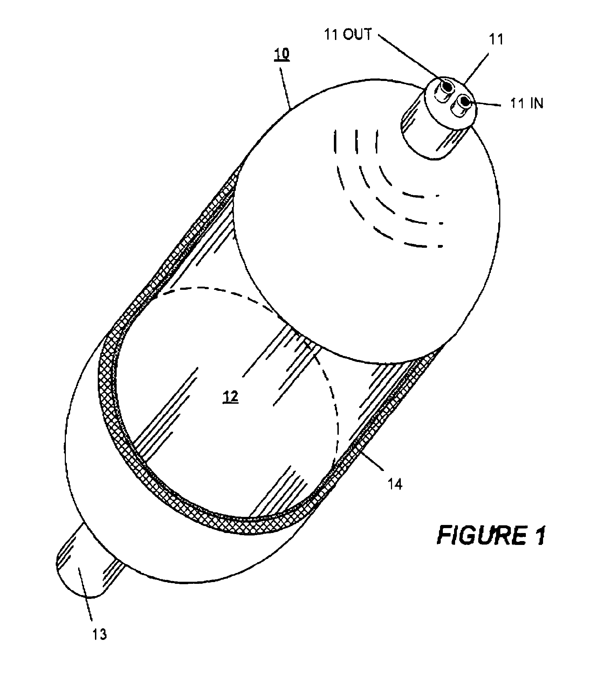

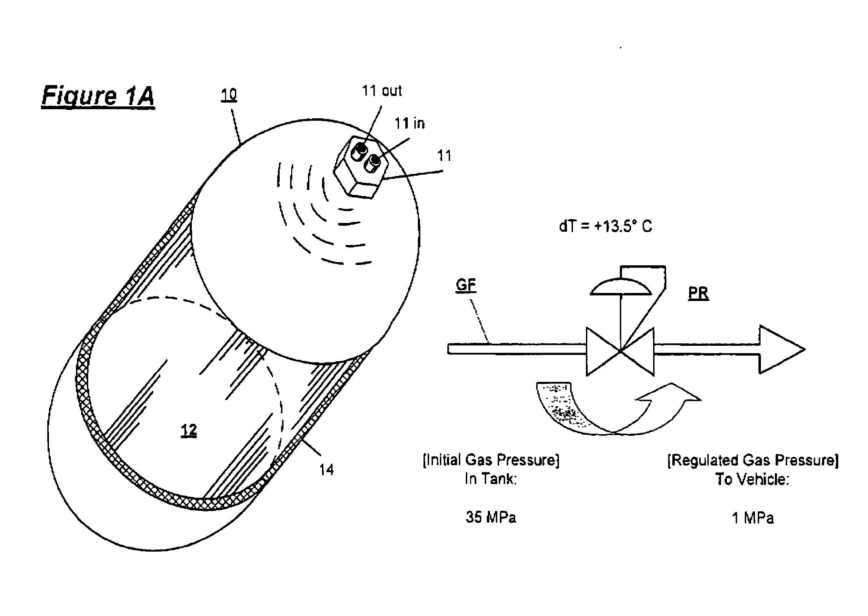

Figure 1 is a cut away view showing a typical cylindrical high pressure gas storage tank formed from a carbon composite material wherein a carbon fiber strand material is impregnated within an epoxy or other resin binder. The tank shown includes a metal boss at each end and inlet and outlet gas flow components embedded within the boss at one end, and an interior volume.

Figure 1A is a diagram showing the calculation of the heat recovery available for gas warming from the Joule Thompson effect as hydrogen stored within the tank is decompressed while used for vehicle operation. A carbon fiber resin composite shell tank 10 includes outer wall 14a and liner 14b, an interior volume for gas storage 12, boss 11, and gas outflow conduit 11 out. Gas stored under high pressure, 30-35 MPa, in the tank volume flows through outlet conduit GF through a pressure regulator PR lowering gas pressure to 1 MPa, wherein heat energy is released.

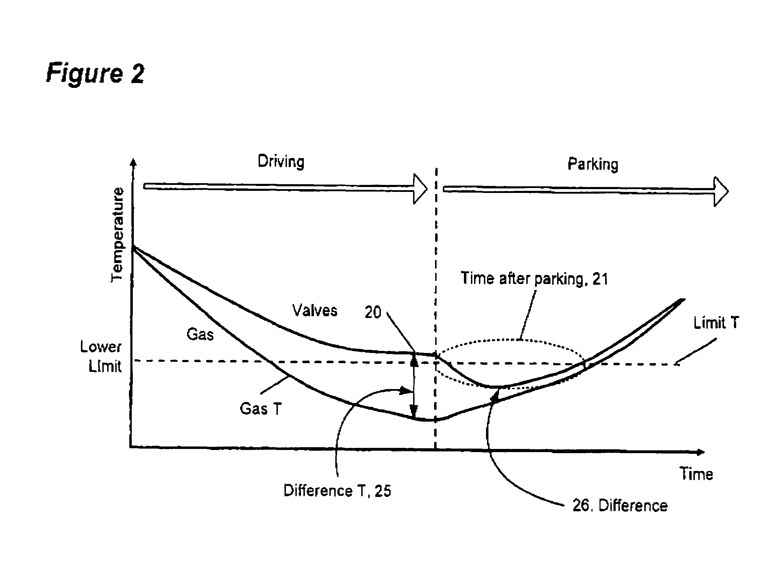

Figure 2 is a chart of gas and valve temperatures of the tank plotted against a time axis depicting relative temperatures of the gas within the tank and the metal boss elements during the vehicle conditions of driving and parking. The cooling of the metal components after driving is shown wherein valve temperatures are below the lower tolerance limit after driving.

Figures 3-6 and Figures 7A, 7B, 8A, 8B and 9 show features of a warming system utilizing the electrically conductive characteristics of the fiber composite material from which a tank is formed.

Figure 3 is a side view of a tank and warming system of the invention wherein an electric power source is interconnected with embedded electrodes connecting with the conductive fiber elements forming the tank wall to provide heating for the gas and tank.

Figure 4 is a side view of a warming system of the invention wherein an electric power source is interconnected to the conductive metal bosses extending from opposite ends at either side of the tank.

Figure 5 is a side view of a warming system of the invention wherein an electric power source is interconnected to intrinsically formed conductive fiber extensions leading from each of the opposite sides of the tank ends.

Figure 6 is a side view of a warming system of the invention wherein electrodes are implanted within the tank wall at locations predetermined on the tank based on the conductivity properties of the composite material forming the tank. The electrodes are interconnected with an electric power source.

Figure 7A is an enlarged cross section of tank wall segment **7A→ ←7A** through the tank wall shown in Figure 6. Figure 7B shows enlarged cross sections of a tank wall segment showing an alignment of fibers. In each Figure, the fibers comprise a mixture of conductive filler and carbon fiber embedded in an epoxy material forming the composite.

Figure 8A shows, in a side cross section detail, a tank including a conductive / resistive composite structure having an interior metal liner with an insulating layer sandwiched between the conductive composite tank structure and a metal liner in the tank.

Figure 8B is a cross section through section 8 → ← 8B of the metal lined tank wall of Figure 8A.

Figure 9 illustrates a temperature control system utilized in the invention with the heating system of Figure 3 shown as an example.

Figure 10 illustrates a temperature control system combined with a supplemental warming system.

## DETAILED DESCRIPTION OF THE INVENTION

In brief, the invention provides a warming system for high pressure gas storage tanks utilized on high pressure gas fueled vehicles including vehicles powered by compressed natural gas, CNG, and fuel cell and internal combustion engines powered by hydrogen gas. In many examples, such vehicles include gas fuel tanks that may include gas absorbing materials in the interior of the tank. During driving, the gas cools because a decrease in the tank pressure occurs. When a vehicle tank includes gas absorbing materials, the gas absorbing materials absorb heat during the gas discharge from the tank further contributing to the cooling effect. Environmentally, a typical ambient temperature is approximately 20° C. In cold climates, the internal gas temperature in a vehicle tank can drop to -60° C or below, a temperature that may be below the permissible operating temperature range of O-ring and/or other rubber or polymer seals used in the tank and the port inlet and outlet metal part assemblies that control the inflow and outflow of gas to and from the storage tank. Below the acceptable temperature range, variances allowable for seals, valves, control devices, and the like, may be exceeded by thermally caused mechanical variations in the tank and associated assemblies. Leakage of the stored gas may result.

With reference to Figure 1, high pressure tanks are typically cylindrical with semi spherically shaped domed ends and are formed from a carbon composite shell, a mixture of resin and carbon fiber and may also include supplemental shells such as an outer shell and an interior liner sandwiching a carbon fiber middle layer. Figure 1 shows a typical high pressure gas storage tank **10** having an interior volume **12** for the storage of gas with sidewall 14, including a first boss 11 and second boss 13 at either end, A gas inlet and gas outlet are shown at boss 11 as 11 in and 11 out. A fiber sidewall may usually include an interior liner.

Driving and parking temperature conditions in the vehicle tank system are charted in Figure 2. During driving, the gas temperature, Gas T, may exceed the lower tolerance limit, for example, of the flow control system, Limit T, by the temperature difference shown as Difference T, 25. Figure 2 illustrates a parking condition, wherein, with time, the temperature 20 of the valve/control/mechanical parts system cools to a difference 25, such that, in the period after parking 21, the valve temperature 20 cools to temperature 26, below the lower acceptable limit of temperature tolerance.

## EXAMPLE I

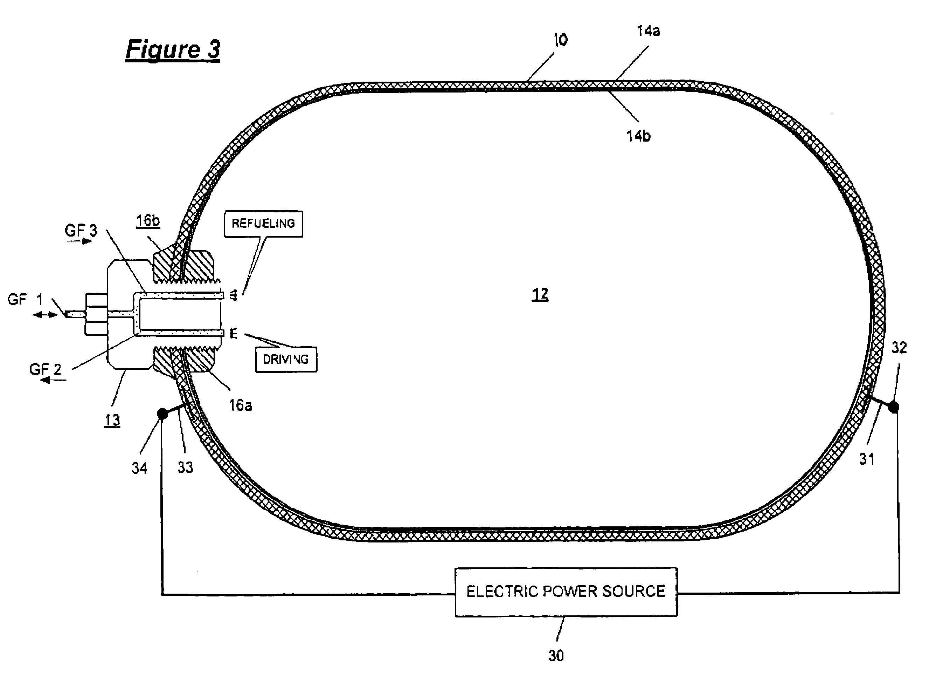

In a first example shown in Figures 3-6 and Figures 7A, 7B, 8A, 8B and 9, the invention provides a solution that can efficiently warm the storage tank utilizing intrinsic electrical conductivity characteristics of the fiber and binder materials utilized in the fabrication of the tank. In examples, the carbon fiber layer in the tank itself can be used as a heater to warm the gas tank itself. Because carbon fiber layer has an electrical conductivity, the fiber can be heated up when an electrical potential is applied to an appropriate resistive expanse of a tank section. In another example, the metal end ports of the tank can be used as electrical terminals applying the current to the conductive tank fiber. Intrinsic extensions fabricated from the tank material and interconnected with the conductive tank fiber can be used as electrical terminals. In other examples, electrical terminals can be installed in the tank wall, connecting with conductive fibers, allowing a connection to the electric warming current. In instances wherein the carbon fiber of the tank is excessively resistive, conductive filler mixed into the resin (epoxy) forming the tank is effective to reduce the resistance. Usually the resin will have a very high electrical resistance. Similarly, variations in the proportional mixture of conductive fiber and the carbon fiber are effective to reduce the resistance. In instances where the tank includes a metal liner, the metal liner has much lower resistance than the carbon layer and will produce an electrical short. An electrical isolation layer between the tank carbon fiber and the metal liner will prevent an electrical short from occurring.

In Example I, only a stall change in tank design is required and higher heating efficiency will result compared with an external heater system because the tank itself is heated up directly- Fiber composite high pressure storage tanks are formed from extending fiber strands, filler, and other materials embedded in a resin foundation. The invention provides a heating system for a fiber composite high pressure gas storage tank whereby the temperature of the gas within the tank and the gas flow components associated with the tank gas flow control system at one or more boss assembly at the tank ends are maintained above the lower temperature design tolerance limit for the tank and boss assembly- in the invention, the tank wall is formed from a polymeric binder having embedded therein longitudinally extending electrically conductive and resistive fiber material strands and an electric power source is interconnected with the conductive and resistive fibers forming the tank wall.

The electrically conductive and resistive fiber material strands in the tank intrinsically heat the tank and boss assembly system upon the application of an electric current. In examples, 1) electrodes are embedded in the composite fiber composition of the tank wall to define an electrically resistive path for current flow within the conductive fiber materials of the tank wall; 2) conductive metal bosses at either end of the tank are connected to an electrical power source providing a flow of warming current to the conductive shell; 3) an electric power source is interconnected to electrically conductive fiber extension elements intrinsically formed in the tank shell and lead from the conductive composite tank shell at each of the opposite sides of the tank ends to an interconnection with an electrical power source. When a metal boss is at either or both ends of the tank and a tank wall has an interior metal liner; an insulating layer sandwiched between the conductive fiber composite tank shell structure and the metal liner is provided wherein the insulating layer isolates the conductive wall of the tank from the electrically conductive fiber wall and the one or more metal boss from the flow of electric current.

A temperature control system utilizing temperature sensors may be utilized in embodiments of the invention to provide temperature stabilization. Measurement data is input into the control system for one or more of valve temperature, tank wall temperature, gas temperature and ambient temperature. The control temperature maintained by the system, as determined by the flow of electric current into the fiber components of the tank is such that the gas temperature and the temperature of the metal components associated with the tank does not drop below the lower tolerance temperature limit of the tank and the components associated with the tank gas flow control system at the one or more boss at the tank ends.

Electrically conductive materials forming the tank wall include a filler comprised of a metal powder composition; the powder composition may include one or more of aluminum, copper, nickel, silver, stainless steel, and titanium (AI, Cu, Ni. Ag, SUS, and Ti) powders, a carbon black powder, ceramic powder, and plastic powder coated with an electrically conductive metal. Preferred electrically conductive materials used in forming the tank wall include a filler that is usually a powder composition characterized by an average particle size diameter ranging from about approximately $0.1 \times 10^{-6}$m to about approximately $500 \times 10^{-6}$m. Electrically conductive carbon nano tubes may be embedded in the tank wall composition. Other electrically conductive fiber materials used in forming the tank wall include metal wires and carbon, glass, and plastic fibers coated with metal.

The resistive/conductive properties of the tank wall to which the electric current is applied range from 0.1 ohm to 100 ohm. The electric power source is interconnected with electrodes associated with the tank wall to form an electrically active circuit for current flow and the warming power input into the system. Warming power, P-warming [W], is determined by the tank and gas flow assembly tolerance temperature during the vehicle operation, wherein Warming Power Current (1) is determined by the formula: I-tank= (P-warming / R-tank)^0.5; and Warming Power Voltage (E) is determined by the formula: EI-tank= I-tank x R-tank. The electric power source interconnected with the tank wall may be isolated from other electric lines in the vehicle and in such an instance, a DC/DC converter or DC/AC inverter comprises the tank warming power source.

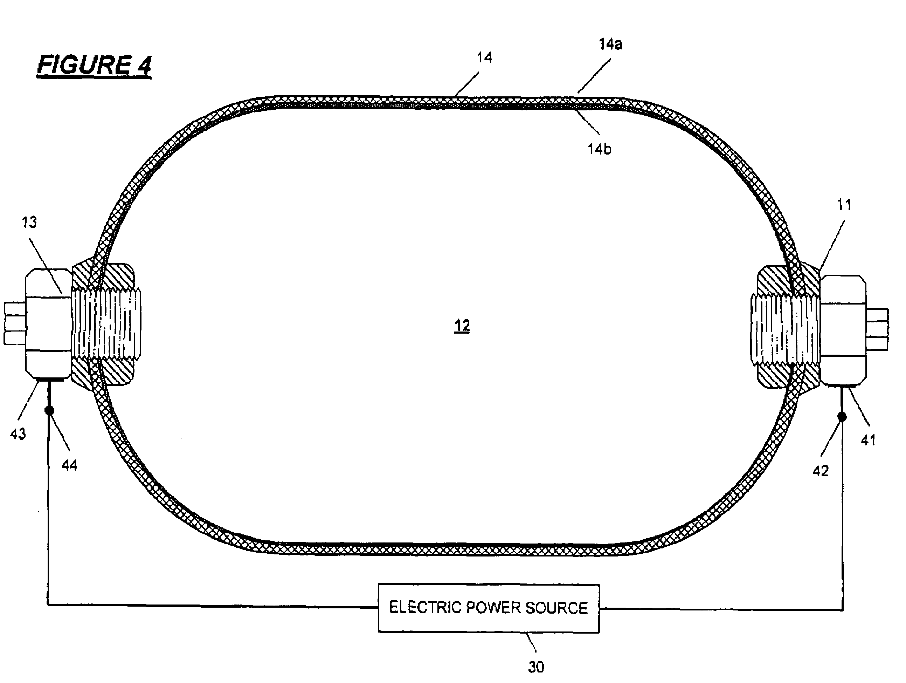

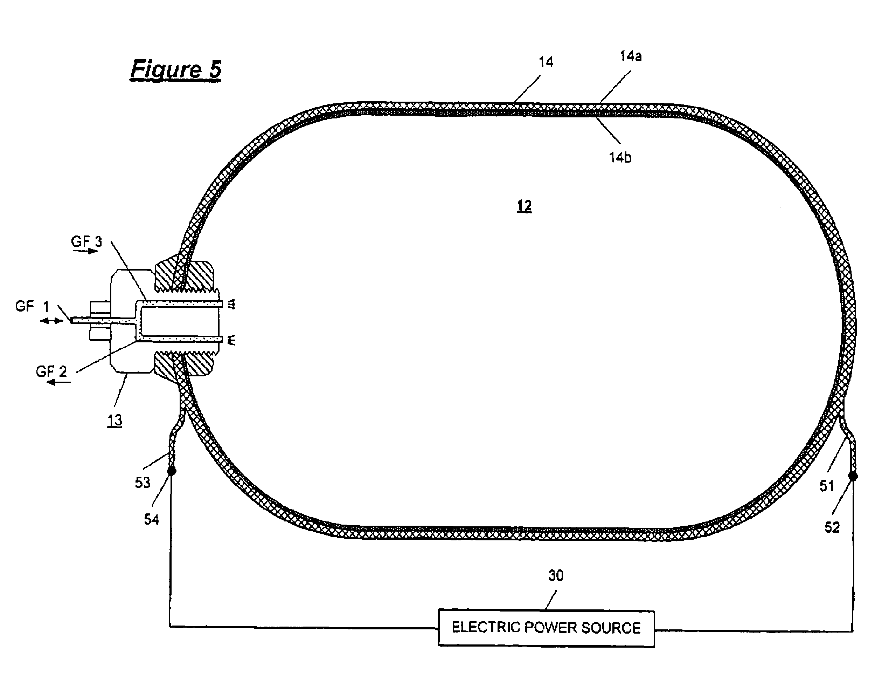

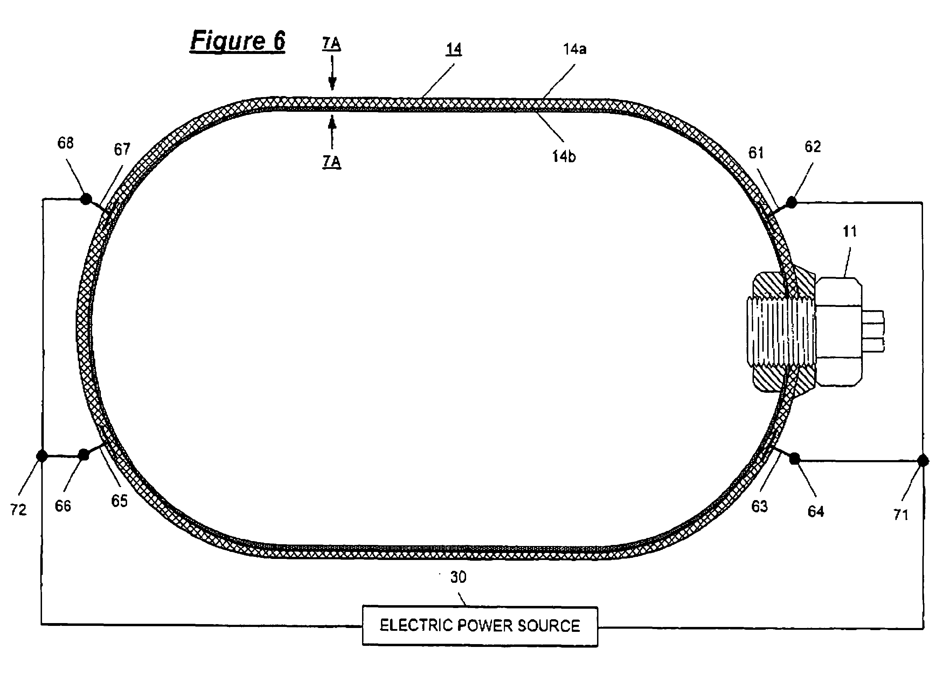

Figure 3 depicts component parts of an example of a heating system: tank 10, composite shell 14a and liner 14b, interior volume for gas storage 12, boss 13, and gas flow conduits: external inlet/outlet conduit GF 1. internal outlet conduit GF 2 for depletion of gas during driving and internal inlet conduit GF 3 for gas refilling. The gas flow conduits embedded in the boss may also have embedded therein (not shown) check valves, a pressure regulator and control valves in each of GF 2 and GF 3. Electrodes 31 and 33 are embedded in the composite fiber tank wall connecting with conductive/resistive fibers to define an electrically resistive path for current flow within the tank wall for heating the composite shell. The electrodes are connected to terminals 32 and 34 that are in turn connected to an electrical power source 30 providing a flow of warming current to the conductive shell. Figure 4 is a side view of a warming system of the invention wherein the electric power source 30 is interconnected to the conductive metal bosses 11 and 13 extending from opposite ends at either side of the tank. The boss electrodes 41 and 43 are connected to terminals 42 and 44 that are in turn connected to electrical power source 30 providing a flow of warming current to the conductive shell. Figure 5 is a side view of a warming system of the invention wherein an electric power source is interconnected to electrically conductive fiber extension elements 51 and 53 intrinsically formed in the tank shell and leading from the conductive composite tank shell 14a at each of the opposite sides of the tank ends. The intrinsic tank electrodes 51 and 53 are connected to terminals 52 and 54 that are in turn connected to electrical power source 30 providing a flow of warming current to the conductive shell. Figure 6 is a side view of a warming system of the invention wherein electrodes 61, 63, 65, and 67 are implanted within the tank wall at locations predetermined on the tank based on the conductivity properties of the composite material forming the tank. The electrodes are interconnected with an electric power source through terminals 62, 64, 66 and 68 that are in turn connected to electrical power source 30 providing a flow of warming current to the conductive shell.

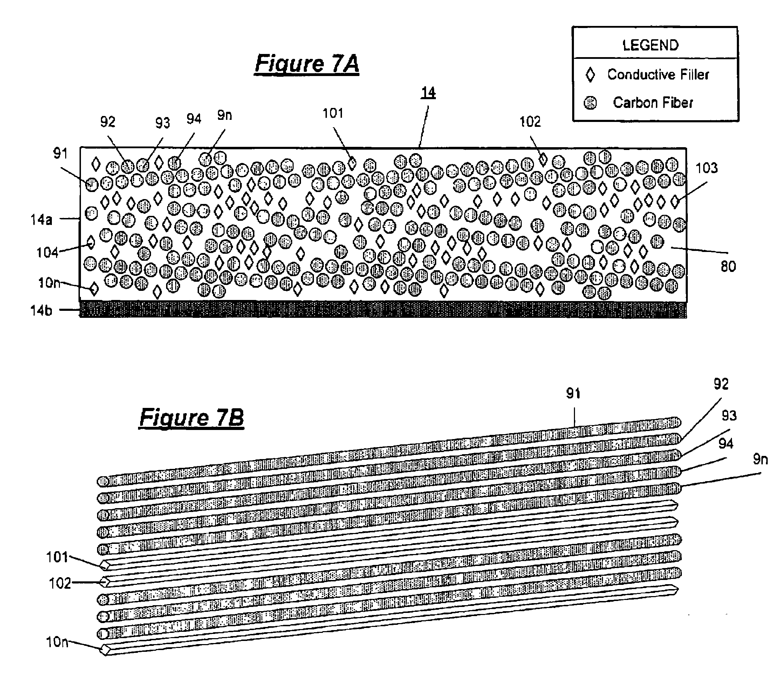

Figure 7A is an enlarged cross section of typical wall section of a tank having an interior liner such as shown in tank wall segment **7A** $\rightarrow \leftarrow$ **7A** in Figure 6. In Figure 7A, the composite tank shell 14a is shown formed from an epoxy binder 80, having embedded therein longitudinally extending carbon filler fiber material strands 91, 92, 93, 94, 9n., ...and longitudinally extending conductive filler fiber material strands 101, 102, 103, 104, and 10n, .... A solid plastic liner 14b is shown bonded to the interior surface of composite shell 14a. Figure 7B shows enlarged cross sections of a tank wall segment showing an alignment of the filler and fiber strands depicted in Figure 7A.

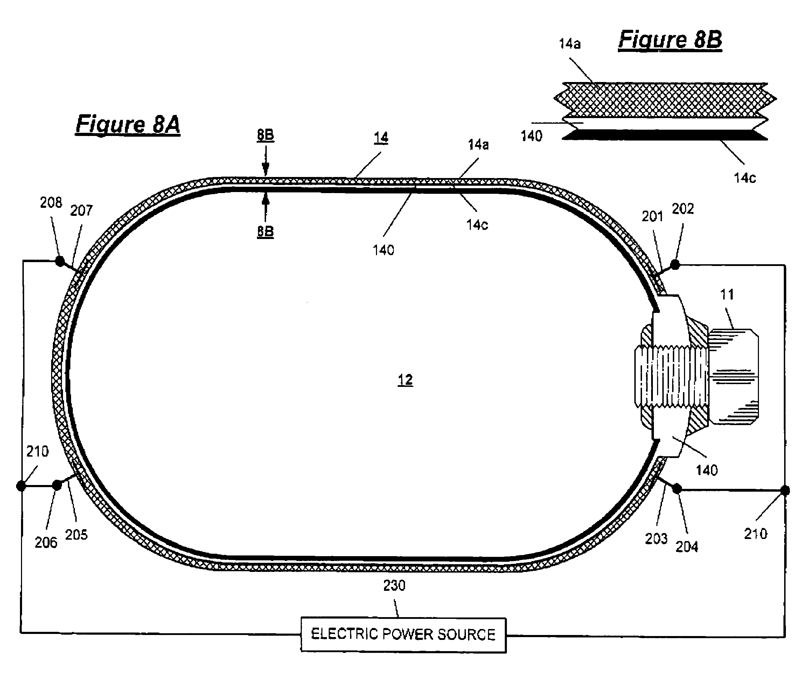

Figure 8A shows, in a side cross section detail, a tank wall **14** including a conductive / resistive composite structure 14a having an interior metal liner 14c with an insulating layer 140 sandwiched between the conductive composite tank structure 14a and the metal liner 14c. In Figure 8A, the warming system of the invention includes electrodes 201, 203, 205, and 207 implanted within the tank wall. The electrodes are interconnected with an electric power source 230 through terminals 202, 204, 206 and 208 that are in turn connected to electrical power source 230 providing a flow of warming current to the conductive shell. The insulating layer 140 isolates both the conductive wall of the tank 14a from the electrically conductive tank wall 14a and the metal boss 11 from the flow of electric current to prevent a shorting condition.

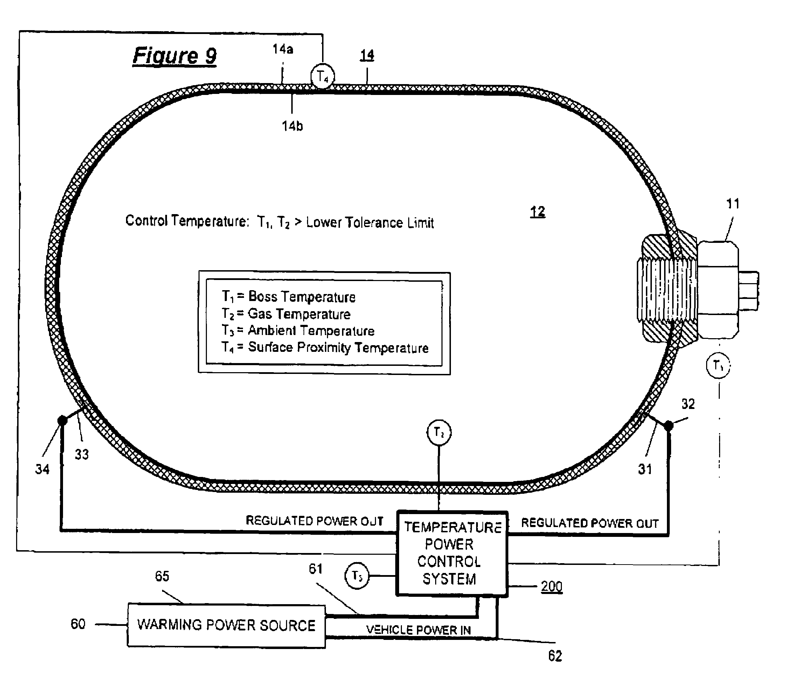

Figure 9 illustrates a temperature control system utilized in the invention useful with embodiments of the invention. The temperature control system may be utilized for overall temperature monitoring and regulation of the tank and gas flow components. In the example in Figure 9, sensors measure $T_1$ = Boss Temperature; $T_2$ = Gas Temperature; $T_3$ = Ambient Temperature; and $T_4$ = Surface Proximity Temperature. The sensed temperatures are input into the control system 200 regulating overall gas and tank temperature such that the Control Temperature, generated by the warming system, as regulated by the control processor 200 is: $T_1$, $T_2$ > Lower Tolerance Limit of the tank and valve components. Control processor 200 regulates the energy flow from the warming power source 65 input into the supplemental warming system, which may be either an electrical system or a fluid system, interconnected to the tank at energy input connectors 61 and 62. With reference to Figure 2 showing temperatures in various operating modes, the control system 200 will provide warming to the system such that the temperature differences shown as Difference T, 25 and 26, Difference are eliminated and the lower tolerance limit of the system is not exceeded.

With reference to Figure 7A and Figure 7B, preferred electrically conductive materials used in forming the tank wall include a filler that is usually a powder or strand composition characterized by an average diameter ranging from about approximately $0.1 \times 10^{-6}$m to about approximately $500 \times 10^{-6}$m. Useful powders include metal powders such as Al, Cu, Ni, Ag, SUS, Ti, and similar metal compositions having like conductive properties and metal plated carbon black, ceramic, and plastic powders. The tank wall fiber component includes wires formed from the aforementioned metals and metal plated fibers such as carbon fibers, glass fibers, plastic fibers and carbon nano tube fibers. Useful resistive/conductive parameters for the expanse of the tank wall heated as determined by the placement of the electrodes connected to the power source range in resistance from 0.1 ohm to 100 ohm.

In the control system depicted in Figure 9, the power source (AC or DC, and respective voltage and current and frequency) is a matter of design choice allowing many variations depending on the optimum design control temperature. Power requirements are calculated in accordance with Ohm's law. Warming power input into the system, P-warming [W], is determined by the tank temperature during the vehicle operation, wherein Current (I) is determined by the formula: I-tank= (P-warming / R-tank)^0.5; Voltage (E) is determined by the formula: El-tank= 1-tank x R-tank. From an electrical isolation point, the tank warming power source may be isolated from other electric lines in the vehicle depending on designer preference. In this case, a DC/DC converter or DC/AC inverter must be installed as the tank warming power source.

In an embodiment, the invention includes a tank wall lining formed from one or more metal selected from the group of iron, stainless steel, titanium, magnesium, tin, nickel, zinc, chromium (Fc, SUS, Nichrome®, (a brand name for a non-magnetic alloy of nickel and chromium) or an alloy of the foregoing, and similar inductively active materials or compositions.

Thus, where the typical high pressure gas tank for motor vehicles is formed from a carbon fiber composite shell (carbon fiber resin polymer," CFRP") and an internal liner is formed from aluminum or plastic, the invention allows minor variations in tank composition to achieve tank heating. Preferred characteristics of tank components include the electrical and electromagnetic characteristics of the tank and shell wherein one or both of the shell and the liner require only an electrical resistance. As examples, a plastic liner will have a non-conductive resistance in the range of over $10^6$ ohm*m. In contrast, an aluminum liner will have a resistance of about $2.65 \times 10^{-8}$ ohm*m. The carbon fiber resin polymer shell will have a resistance of $1\text{-}2 \times 10^{-5}$ ohm*m. AC current frequency to the induction coil in the invention will be in the range of 20Hz to 50kHz.

Thus, where the typical high pressure gas tank for motor vehicles is formed from a carbon fiber composite shell (carbon fiber resin polymer," CFRP") and an internal liner usually formed from aluminum or plastic, the invention allows minor variations in tank composition or limited additions to liner configuration to achieve tank heating.

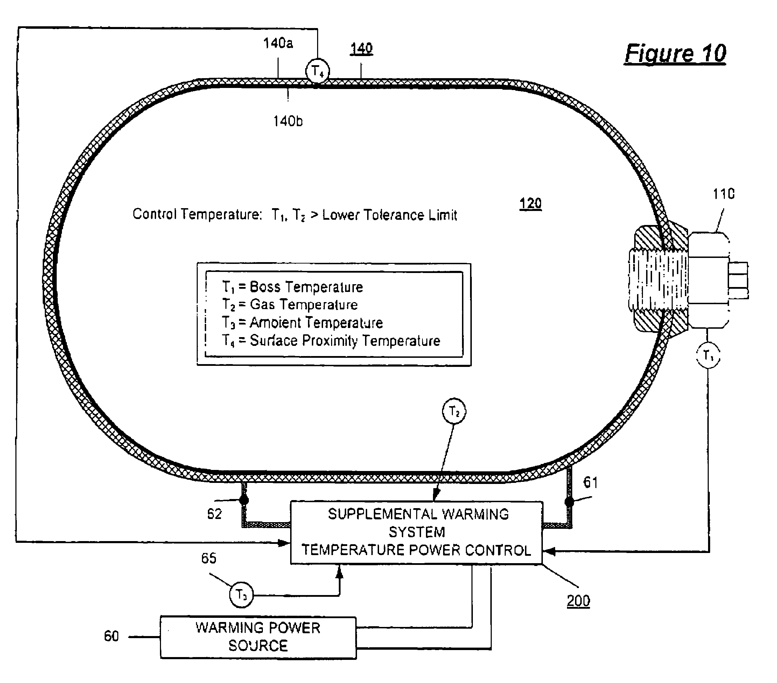

A supplemental warming system may be utilized for overall temperature regulation. A temperature power control system is shown in Figure 10. In the example of Figure 10, sensors measure $T_1$ = Boss Temperature; $T_2$ = Gas Temperature; $T_3$ = Ambient Temperature; and $T_4$ = Surface Proximity Temperature. The sensed temperatures are input into the temperature power control system 200 that regulates power input into the supplemental system and thereby regulates overall gas and tank temperature such that the Control Temperature. regulated by the control processor system 200, is: $T_1$ and $T_2$ > Lower Tolerance Limit of the tank and valve components. Control system 200 regulates the energy flow from the warming power source 60 input into the supplemental warming system. The supplemental warming may be provided as either an electrical system or a fluid system, interconnected to the tank at regulated power energy input connectors 61 and 62. With reference to Figure 2 showing temperatures in various operating modes, the control system 200 maintains the system temperatures such that the temperature differentials shown are eliminated and the lower tolerance limit of the system is not exceeded.

## INDUSTRIAL APPLICABILITY

High pressure CNG or hydrogen gas fueled vehicles powered by engines or fuel cells require an extended driving range, achieved by increasing the quantity of fuel stored in an on board tank. As the quantity of fuel stored is increased, pressure of gas within the tank likewise increases. Temperature fluctuations occur inside and outside on board tanks, that, along with pressure variations occurring during tank refill and depletion and cause mechanical stress in the tank system as a result of the expansion and contraction of the physical components that comprise the tank and any *in situ* thermal management (heat exchanger) and/or gas flow devices (valves and regulators) that may be installed therein. The decompression of gas as a tank is depleted lowers temperature and produces stress. Additionally, cold temperature, by itself, may induce internal or external leaks. The thermal warming and temperature control system described and claimed is useful to promote gas flow and relieve stresses induced within the tank by the effects of gas heating during refill, gas cooling during tank depletion, and environmental temperature fluctuations. The invention enhances the integrity and durability of the tank system assembly and the gas flow control system associated with the tank assembly.

## Claims

1. Apparatus for controlling the temperature of a high pressure gas fuel storage system on board a vehicle, gas fuel being exhausted from the storage system during driving of the vehicle, the apparatus comprising:

   a cylindrical fiber composite tank (10) comprising a wall (14) having dome shaped opposite ends, the wall enclosing an interior volume (12) for storing the high pressure gas fuel and at least one of said dome shaped opposite ends including a metal tank boss (11, 13) having a gas outlet flow control system (GF1), the gas outlet flow control system being sensitive to low temperature affecting the operability of the gas fuel storage system;
   **characterised by**:

   longitudinally extending electrically conductive, resistive fiber strands (91, 92, 93, 94... 9n) embedded within the wall (14) of the tank structure that are connected to an electric power source (30) for heating either one or both of the tank and boss assembly by application of an electric current to said strands, and
   a temperature control system (200) utilizing temperature sensors (T1, T2, T3, T4) to provide temperature measurement for data input into the control system for one or more of valve temperature, tank wall temperature, gas temperature and ambient temperature for maintaining the gas temperature and the temperature of the metal components associated with the tank at or above a lower tolerance temperature limit of the tank.

2. The apparatus of claim 1 wherein electrodes (61, 63, 65, 67; 201, 203, 205, 207; 31, 33) are embedded in the tank wall (14) and are electrically connected to the embedded fiber strands (91, 92, 93, 94...9n) to define an electrically resistive path for current flow through the conductive fiber strands.

3. The apparatus of claim 1 wherein said at least one conductive metal boss (11, 13) at the or each end of the tank (10) is electrically connected to electrically conductive embedded strands (91, 92, 93, 94...9n) in the tank wall (14), said at least one boss being connected to the electric power source (30) for providing a flow of current through the strands in the conductive resistive fiber strands extending within the tank wall (14) for warming the gas within the tank and the metal components associated therewith.

4. The apparatus of claim 1 wherein the electric power source (30) is interconnected to electrically conductive fiber elements (51, 53) extending from the electrically conductive embedded strands (91, 92, 93, 94...9n) that are intrinsically formed in the tank wall (14), the extending fiber elements leading from the tank wall at each of the opposite sides of the tank ends to an interconnection with the electric power source.

5. The apparatus of claim 1 wherein the tank wall (14) has an interior metal liner (14c) and an insulating layer (140) sandwiched between the conductive fiber strands (91, 92, 93, 94...9n) in the tank wall (14) and the metal liner, wherein the insulating layer isolates the conductive metal liner of the tank from the embedded electrically conductive fiber strands in the wall and said at least one metal boss (11, 13) from the flow of electric current.

6. The apparatus of claim 1 wherein electrically conductive strands (91, 92, 93, 94...9n) embedded within the tank wall (14) include a filler (101, 102, 103, 104...10n) comprised of a metal powder composition.

7. The apparatus of claim 6 wherein the powder composition is comprised of one or more of Al, Cu, Ni, Ag, SUS, and Ti.

8. The apparatus of claim 6 wherein the powder composition is comprised of one or more of carbon black powder, ceramic powder, and plastic powder, all coated with an electrically conductive metal.

9. The apparatus of claim 1 wherein the tank wall (14) includes carbon nano tubes embedded therein.

10. The apparatus of claim 1 wherein electrically conductive fiber materials (91, 92, 93, 94...9n) embedded in the tank wall (14) include metal wires and carbon, glass, and plastic fibers coated with metal.

11. The apparatus of claim 1 wherein the resistive/conductive properties of the conductive fiber strands (91, 92, 93, 94...9n) embedded in the tank wall (14) to which the electric current is applied range from 0.1 ohm to 100 ohm.

12. The apparatus of claim 1 including an electric power source (30) interconnected with electrodes (61, 63, 65, 67; 201, 203, 205, 207; 31, 33) associated with the conductive fiber strands (91, 92, 93, 94...9n) embedded in the tank wall (14) to form an electrically active circuit for current flow input into the system, $P_{-warming}$ [W], is determined by the tank and gas flow assembly tolerance temperature during the vehicle operation, wherein:

Current (1) is determined by the formula:

$$I_{-tank} = (P_{-warming}/R_{-tank})\,0.5;$$

and
Voltage (E) is determined by the formula:

$$EI_{-tank} = I_{-tank} \cdot times \cdot R_{-tank}.$$

13. The apparatus of claim 1 wherein the electric power source (30) interconnected with the conductive fiber strands (91, 92, 93, 94...9n) embedded in the tank wall (14) is isolated from other electric lines in the vehicle.

14. The apparatus of claim 1 wherein a DC/DC converter or DC/AC inverter comprises the tank warming power source (30) or a supplemental tank warming power source (60).

**Patentansprüche**

1. Vorrichtung zum Regeln der Temperatur einer Hochdruck-Treibgasspeicherungsanlage an Bord eines Fahrzeugs, wobei das Treibgas während des Fahrens des Fahrzeugs aus der Speicherungsanlage abgelassen wird, wobei die Vorrichtung Folgendes umfasst:

einen zylindrischen Faserverbundwerkstoff-Tank (10), der eine Wand (14) umfasst, die kuppelförmige entgegengesetzte Enden hat, wobei die Wand ein inneres Volumen (12) zum Speichern des Hochdruck-Treibgases umschließt und wenigstens eines der kuppelförmigen entgegengesetzten Enden einen Metall-Tankstutzen (11, 13) einschließt, der eine Gasauslass-Durchflussregelungsanlage (GF1) hat, wobei die Gasauslass-Durchflussregelungsanlage empfindlich für eine niedrige Temperatur ist, welche die Funktionsfähigkeit der Treibgas-Speicherungsanlage beeinträchtigt, **gekennzeichnet durch**:

sich in Längsrichtung erstreckende elektrisch leitfähige Widerstandsfaserstränge (91, 92, 93, 94... 9n), die innerhalb der Wand (14) der Tankstruktur eingebettet sind, die mit einer Elektroenergiequelle (30) verbunden sind, um **durch** das Anlegen eines elektrischen Stromes an die Stränge entweder eines oder beides von der Baugruppe aus Tank und Stutzen zu erhitzen, und
eine Temperaturregelungsanlage (200), die Temperatursensoren (T1, T2, T3, T4) benutzt, um eine Temperaturmessung zur Dateneingabe in die Regelungsanlage für eine oder mehrere von der Ventiltemperatur, der Tankwandtemperatur, der Gastemperatur und der Umgebungstemperatur bereitzustellen, um die Gastemperatur und die Temperatur der mit dem Tank verknüpften Metallbestandteile bei oder oberhalb einer unteren Toleranztemperaturgrenze des Tanks zu halten.

2. Vorrichtung nach Anspruch 1, wobei Elektroden (61, 63, 65, 67; 201, 203, 205, 207; 31, 33) in der Tankwand (14) eingebettet sind und elektrisch mit den eingebetteten Fasersträngen (91, 92, 93, 94... 9n) verbunden sind, um einen elektrischen Widerstandsweg für einen Stromfluss durch die leitfähigen Faserstränge zu definieren.

3. Vorrichtung nach Anspruch 1, wobei der wenigstens eine leitfähige Metallstutzen (11, 13) an dem oder jedem Ende des Tanks (10) elektrisch mit den elektrisch leitfähigen eingebetteten Strängen (91, 92, 93, 94... 9n) in der Tankwand (14) verbunden ist, wobei der wenigstens eine Stutzen mit der Elektroenergiequelle (30) verbunden ist, um einen Fluss von Strom durch die Stränge in den leitfähigen Widerstandsfasersträngen, die sich innerhalb der Tankwand (14) erstrecken, zu gewährleisten, um das Gas innerhalb des Tanks und die mit demselben verknüpften Metallbestandteile zu erwärmen,

4. Vorrichtung nach Anspruch 1, wobei die Elektroenergiequelle (30) wechselseitig mit elektrisch leitfähigen Faserelementen (51, 53) verbunden ist, die sich von den elektrisch leitfähigen eingebetteten Strängen (91, 92, 93, 94... 9n) aus, die inhärent in der Tankwand (14) geformt sind, fortsetzen, wobei die sich fortsetzenden Faserelemente von der Tankwand aus an jeder der entgegengesetzten Seiten der Tankenden bis zu einer wechselseitigen Verbindung mit der Elektroenergiequelle führen.

5. Vorrichtung nach Anspruch 1, wobei die Tankwand (14) eine innere Metallauskleidung (14c) und eine isolierende Lage (140), die zwischen den leitfähige Fasersträngen (91, 92, 93, 94... 9n) in der Tankwand (14) und der Metallauskleidung eingeschoben ist, wobei die isolierende Lage die leitfähige Metallauskleidung des Tanks gegenüber den eingebetteten elektrisch leitfähigen Fasersträngen in der Wind und den wenigstens einen Metallstutzen (11, 13) gegenüber dem Fluss von elektrischem Strom isoliert.

6. Vorrichtung nach Anspruch 1, wobei innerhalb der Tankwand (14) eingebettete elektrisch leitfähige Stränge (91, 92, 93, 94... 9n) einen Füllstoff (101, 102, 103, 104... 10n) einschließen, der aus einer Metallpulver-Zusammensetzung besteht.

7. Vorrichtung nach Anspruch 6, wobei die Pulper-Zusammensetzung aus einem oder mehreren von Al, Cu, Ni, Ag, SUS und Ti besteht.

8. Vorrichtung nach Anspruch 6, wobei die Pulverzusammensetzung aus einem oder mehreren von Rußpulver, Keramikpulver und Kunststoffpulver, alle mit einem elektrisch leitfähigen Metall überzogen, besteht.

9. Vorrichtung nach Anspruch 1, wobei die Tankwand (14) in derselben eingebettete Kohlenstoff-Nanoröhren einschließt.

10. Vorrichtung nach Anspruch 1, wobei in der Tankwand (14) eingebettete elektrisch leitfähige Faserwerkstoffe (91, 92, 93, 94... 9n) Metalldrähte und mit Metall überzogen Kohlenstoff-, Glas- und Kunststoff-Fasern einschließen.

11. Vorrichtung nach Anspruch 1, wobei die Widerstands-/Leitfähigkeitseigenschaften der in der Tankwand (14) eingebetteter leitfähigen Feserstränge (91, 92, 93, 94... 9n), an die der elektrische Strom angelegt wird, von 0,1 Ohm bis 100 Ohm reichen.

12. Vorrichtung nach Anspruch 1, die eine Elektroenergiequelle (30) einschließt, die wechselseitig mit Elektroden (61, 63, 65, 67; 201, 203, 205, 207; 31, 33) verbunden ist, die mit den in der Tankwand (14) eingebetteten leitfähigen Fasersträngen (91, 92, 93, 99... 9n) verknüpft sind, um einen elektrisch aktiven Kreis für eine Stromflusseingabe in die Anlage zu bilden, wobei P-erwärmung [W] bestimmt wird durch die Toleranztemperatur der Tank- und Gazdurchfluss-Baugruppe während des Fahrzeugbetriebes, wobei:

der Strom (I) bestimmt wird durch die Formel:

$$I_{-tank} = (P_{-erwärmung}/R_{-tank})\,0,5,$$

und
die Spannung (E) bestimmt wird durch die Formel:

$$EI_{-tank} = I_{-tank} \cdot R_{-tank}.$$

13. Vorrichtung nach Anspruch 1, wobei die Elektroenergiequelle (30), die wechselseitig mit den in der Tankwand (14) eingebetteten elektrisch leitfähigen Fasersträngen (91, 92, 93, 94... 9n) verbunden ist, gegenüber anderen elektrischen Leitungen in dem Fahrzeug isoliert ist.

14. Vorrichtung nach Anspruch 1, wobei ein GS-/GS-Umrichter oder ein GS-/WS-Wechselriuhter die Tankerwärmungsenergiequelle (30) oder eine zusätzliche Tankexwärmungsenergiequelle (60) umfasst.

**Revendications**

1. Dispositif pour contrôler la température d'un système de stockage de carburant gazeux sous haute pression à bord d'un véhicule, le carburant gazeux étant puisé dans le système de stockage durant le roulage du véhicule, le dispositif comprenant :

un réservoir en composite à base de fibres (10) cylindrique, comprenant une paroi (14) ayant des extrémités opposées conformées en dôme, la paroi délimitant un volume intérieur (12) pour stocker le carburant gazeux sous haute pression et au moins l'une desdites extrémités opposées conformées en dôme incluant un bossage de réservoir (11, 13) métallique, comprenant un système de contrôle d'écoulement de sortie de gaz (GF1), le système de contrôle d'écoulement de sortie de gaz étant sensible à une basse température affectant le caractère opérationnel du d'un système de stockage de carburant gazeux ;
**caractérisé par** :

des torons de fibres résistantes (91, 92, 93, 94 ... 9n) conductrices de l'électricité, s'étendant longitudinalement, incorporés dans la paroi (14) de la structure de réservoir, connectés à une source d'énergie électrique (30) pour le chauffage de soit l'un soit les deux de l'ensemble réservoir et bossage, par application d'un courant électrique auxdits torons, et
un système de contrôle de température (200), utilisant des capteurs de température (T1, T2, T3, T4) pour fournir une mesure de température pour produire une entrée de données dans le système de contrôle, pour une ou plusieurs parmi une température de valve, une température de paroi de réservoir, une température de gaz et une température ambiante, pour maintenir la température de gaz et la température des composants métalliques associés au réservoir à ou au-dessus d'une limite inférieure de tolérance de température du réservoir,

2. Dispositif selon la revendication 1, dans lequel des électrodes (61, 63, 65, 67 ; 201, 203, 205, 207 ; 31, 33) sont incorporées dans la paroi de réservoir (14) et sont connectées électriquement aux torons de fibres (91, 92, 93, 94 ... 9n) incorporés, pour définir un circuit électriquement résistif pour un flux de courant à travers les torons de fibres conductrices.

3. Dispositif selon la revendication dans lequel ledit au moins un bossage (11, 13) métallique conducteurest connecté électriquement, à la ou à chaque extrémité du réservoir (10), à des torons (91, 92, 93, 94 ... 9n) incorporés, conducteurs de l'électricité, dans la paroi de réservoir (14), ledit au moins un bossage étant connecté à la source d'énergie électrique (30), pour fournir un flux de courant à travers les torons dans les torons de fibres résistives s'étendant dans la paroi de réservoir (14), pour le chauffage du gaz se trouvant dans le réservoir et des composants métalliques lui étant associés.

4. Dispositif selon la revendication 1, dans lequel la source d'énergie électrique (30) est interconnectée à des éléments à fibres conductrices de l'électricité (51, 53) s'étendant à partir des torons (91, 92, 93, 94 ... 9n) incorporés, conducteurs de l'électricité, qui sont formés intrinsèquement dans la paroi de réservoir (14), les éléments à fibres s'étendant de la paroi de réservoir de chacun des côtés opposés des extrémités de réservoir, à une interconnexion avec la source d'énergie électrique.

5. Dispositif selon la revendication 1, dans lequel la paroi de réservoir (14) présente un revêtement intérieur (14c) métallique et une couche isolante (140), prise en sandwich entre les torons de fibres (91, 92, 93, 94 ... 9n) conducteurs, dans la paroi de réservoir (14), et le revêtement métallique, la couche isolante isolant le revêtement métallique conducteur du réservoir vis-à-vis des torons de fibres incorporés, conducteurs de l'électricité, se trouvant dans la paroi et ledit au moins un bossage (11, 1,3) métallique contre tout passage de courant électrique.

6. Dispositif selon la revendication 1, dans lequel les torons (91, 92, 93, 94 ... 9n) conducteurs de félectricité, incorporés dans la paroi de réservoir (14), comprennent un matériau de remplissage (101, 102, 103, 104 ... loin) présentant une composition de poudre métallique

7. Dispositif selon la revendication 6, dans lequel la composition de poudre est constituée d'un ou plusieurs produits parmi Al, Cu, Ni, Ag, SUS et Ti.

8. Dispositif selon la revendication 6, dans lequel la composition à poudre est constituée d'un ou plusieurs parmi de la poudre de noir de carbone, de la poudre de céramique, et de la poudre de matière plastique, tous revêtus d'un métal conducteur de l'électricité.

9. Dispositif selon la revendication 1, dans lequel la paroi de réservoir (14) comprend des nanotubes, intégrés en son sein.

10. Dispositif selon la revendication 1, dans lequel les matériaux de fibres (91, 92, 93, 94 . 9n) conducteurs de l'électricité, incorporés dans la paroi de réservoir (14), comprennent des fils métalliques et des fibres de carbone, de verre et de matière plastique, revêtues avec du métal.

11. Dispositif selon la revendication 1, dans lequel les propriétés résistives/conductrices des torons de fibres (91, 92, 93, 94 ... 9n) conducteurs incorporés dans la paroi de réservoir (14) auxquels le courant électrique est appliqué sont situées entre 0,1 et 100 Ohms.

12. Dispositif selon la revendication 1, comprenant une source d'énergie électrique (30) interconnectée avec des électrodes (61, 63, 65, 67 ; 201, 203, 205, 207 ; 31, 33) associées aux torons de fibres (91, 92, 93, 94 ... 9n) conducteurs incorporés dans la paroi de réservoir (14) de manière à former un circuit électriquement actif pour un flux de courant introduit dans le système, $P_{-chauffage}$ [W], est déterminé par la température de tolérance de l'ensemble réservoir et écoulement de gaz durant le fonctionnement du véhicule, dans lequel :

l'intensité (I) est déterminé par la formule :

$$I_{-réservoir} = (P_{-chauffage}/R_{-réservoir})\, 0,5\ ;$$

et

la tension (E) est déterminée par la formule :

$$EI_{-réservoir} = I_{-réservoir}\,.\ fois\,.\ R_{-réservoir}.$$

13. Dispositif selon la revendication 1, dans lequel la source d'énergie électrique (30) interconnectée avec les torons de fibres (91, 92, 93, 94 ... 9n) conducteurs incorporés dans la paroi de réservoir (14) est isolée vis-à-vis d'autres lignes électriques dans le véhicule.

14. Dispositif selon la revendication 1, dans lequel un convertisseur CC/CC ou un inverseur CC/AC comprend la source d'énergie pour chauffer le réservoir (30) ou une source d'énergie supplémentaire pour chauffer le réservoir (60).

FIGURE 1

Figure 1A

dT = +13.5° C

[Initial Gas Pressure] In Tank:

35 MPa

[Regulated Gas Pressure] To Vehicle:

1 MPa

## Figure 2

EP 2 227 651 B1

Figure 3

FIGURE 4

ELECTRIC POWER SOURCE

EP 2 227 651 B1

Figure 5

Figure 6

## Figure 7A

EP 2 227 651 B1

LEGEND

◇ Conductive Filler

⊚ Carbon Fiber

91 92 93 94 9n 101 14 102 103

14a 104 10n 80 14b

## Figure 7B

91 92 93 94 9n 101 102 10n

Figure 8A

Figure 8B

Figure 9

Control Temperature: $T_1$, $T_2$ > Lower Tolerance Limit

$T_1$ = Boss Temperature
$T_2$ = Gas Temperature
$T_3$ = Ambient Temperature
$T_4$ = Surface Proximity Temperature

TEMPERATURE POWER CONTROL SYSTEM

REGULATED POWER OUT

VEHICLE POWER IN

WARMING POWER SOURCE

REGULATED POWER OUT

**Figure 10**

140a   **140**

$T_4$

140b

Control Temperature:  $T_1$, $T_2$ > Lower Tolerance Limit   120

110

$T_1$ = Boss Temperature
$T_2$ = Gas Temperature
$T_3$ = Ambient Temperature
$T_4$ = Surface Proximity Temperature

$T_1$

$T_2$

62   61

SUPPLEMENTAL WARMING SYSTEM
TEMPERATURE POWER CONTROL

65   $T_3$

200

60   WARMING POWER SOURCE

EP 2 227 651 B1

**EP 2 227 651 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 200610219298 A1